# EUROPEAN PATENT APPLICATION

(11) **EP 3 819 317 A1**
(43) Date of publication of application: **12.05.2021**
(21) Application number: 19207695.8
(22) Date of filing: 07.11.2019
(51) Int. Cl.: C08F 210/00, C08L 23/22, H01M 2/16

(54) **WATERPROOFING MEMBRANE WITH A SELF-HEALING LAYER**

(71) Applicant: SIKA TECHNOLOGY AG, 6340 Baar (CH)
(72) Inventor: Wilfried, Carl, 8820 Wädenswil (CH); Knebel, Oliver, 6005 Luzern (CH)
(74) Representative: Sika Patent Attorneys

(57) **Abstract**

The invention is directed to a sealing device comprising a first polymeric layer comprising and a second polymeric layer comprising at least 55 wt.-% of at least one butene-1 copolymer having a content of butene-1 derived units of at least 65 mol.-%. The invention is also related to a method for producing a sealing device and to a method for covering a substrate using the sealing devices of the present invention.

## Description

### Technical field

The invention relates to industrial liners, such as waterproofing and roofing membranes.

### Background of the invention

In the field of construction polymeric sheets, which are often referred to as membranes or panels, are used to protect underground and above ground constructions, such as basements, tunnels, and flat and low-sloped roofs, against penetration of water. Waterproofing membranes are applied, for example, to prevent ingress of water through cracks that develop in the concrete structure due to building settlement, load deflection or concrete shrinkage. Roofing membranes used for waterproofing of flat and low-sloped roof structures are typically provided in form of single-ply or multi-ply membrane systems. A single-ply roofing membrane comprises a single waterproofing layer, which is typically mechanically stabilized with a reinforcement layer, such as a layer of non-woven fabric and/or a reinforcing scrim. Multi-ply roofing membranes comprise two or more waterproofing layers, which can have same or different compositions. Single-ply roofing membranes have the advantage of lower production costs compared to the multi-ply membranes but they are also less resistant to mechanical damages caused by punctures of sharp objects.

Commonly used materials for waterproofing and roofing membranes include plastics, in particular thermoplastics such as plasticized polyvinylchloride (p-PVC), thermoplastic olefin elastomers (TPE-O), and elastomers such as crosslinked ethylene-propylene diene monomer rubber (EPDM). Thermoplastic olefin elastomers (TPE-O), also known as thermoplastic polyolefins (TPO), are specific types of heterophasic polyolefin systems. These are typically blends of a high-crystallinity "base polyolefin", typically having a melting point of 100 °C or more, and a low-crystallinity or amorphous "polyolefin modifier", typically having a glass transition temperature of -20 °C or less. The heterophasic phase morphology consists of a matrix phase composed primarily of the base polyolefin and a dispersed phase composed primarily of particles of the polyolefin modifier. Commercially available TPOs include reactor blends of the base polyolefin and the polyolefin modifier as well as physical blends of the base polyolefin and the polyolefin modifier. Reactor blend-type TPOs are commonly characterized as "in-situ TPOs or "reactor TPOs" or as "heterophasic copolymers".

Waterproofing and roofing membranes are typically delivered to a construction site in form of rolls, unrolled, and cut into suitable pieces to be adhered on the surface of the substrate to be waterproofed. The cutting of the membranes is conducted manually using so-called carpet knives. A membrane may be damaged by a carelessly conducted cutting operation or by any type of sharp tool dropped on the surface of the membrane during the construction phase or during any type of maintenance work. Such damages on the membrane are difficult to notice but they can substantially compromise or even destroy the integrity and thus the waterproofing ability of the membrane, which results in leakage of water through the membrane and into the building with subsequent damage to the building structure and goods inside the building. Cut-type of damages of the membrane are particularly difficult to notice by visual inspection due to the small size of the breaches and the leakages are typically discovered only after the water has already caused significant damage to the building structures.

There is thus a need for a novel type of membrane for use in waterproofing and roofing applications, which provides improved resistance to cuts and other similar damages resulting from fall of sharp objects on the surface of the membrane.

### Summary of the invention

The object of the present invention is to provide a sealing device for use in waterproofing and roofing applications exhibiting improved resistance against cuts and other types of damages resulting from fall of sharp objects on the surface of the membrane.

It has been surprisingly found out that a polymeric layer comprising at least 55 wt.-% of at least one butene-1 copolymer having a content of butene-1 derived units of at least 65 mol.-% can be used for providing multi-layer sealing devices with effective cut-healing properties. In particular it has been found out that a cut produced into such polymeric layer will be partly or even fully closed after storing the polymeric layer only a couple days at normal room temperature. This has been found out to enable providing multilayer sealing devices, such as waterproofing and roofing membranes, which are able to restore their integrity after being damaged by cutting or by a sharp object dropped on their surface. Such multi-layer sealing devices exhibit an improved cut-resistance due to a self-healing property of one of the layers forming the sealing device.

Other subjects of the present invention are presented in other independent claims. Preferred aspects of the invention are presented in the dependent claims.

### Brief description of the Drawings

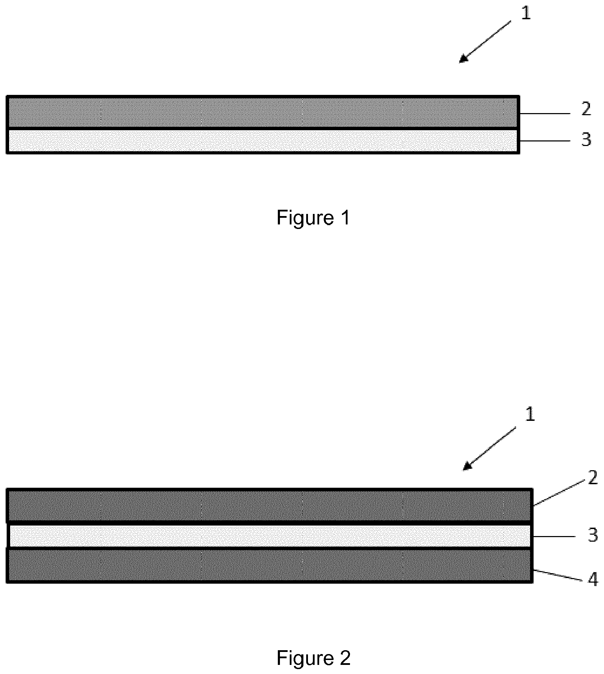

Fig. 1 shows a cross-section of a sealing device (1) comprising a first polymeric layer (2) having first and second major surfaces and a second polymeric layer (3) having first and second major surfaces.
Fig. 2 shows a cross-section of a sealing device (1) comprising a first polymeric layer (2) having first and second major surfaces and a second polymeric layer (3) having first and second major surfaces, and a third polymeric layer (4) having first and second major surfaces, wherein the second polymeric layer (3) is located between the first and third polymeric layers (2, 4).

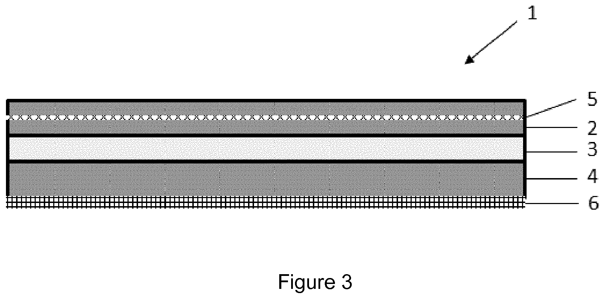

Fig. 3 shows a cross-section of a sealing device (1) according to an embodiment of the sealing device of Fig. 2, wherein the sealing device further comprises a first layer of fiber material (5) fully embedded into the first polymeric layer (2) and a second layer of fiber material (6) partially embedded into the third polymeric layer (4).

### Detailed description of the invention

The subject of the present invention is a sealing device (1) comprising:
i. A first polymeric layer (2) having first and second major surfaces and
ii. A second polymeric layer (3) having first and second major surfaces and comprising at least 55 wt.-%, preferably at least 65 wt.-%, based on the total weight of the second polymeric layer, of at least one butene-1 copolymer having a content of butene-1 derived units of at least 65 mol.-%, preferably at least 70 mol.-%.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "a-olefin" designates an alkene having the molecular formula CₓH2ₓ (x corresponds to the number of carbon atoms), which features a carbon-carbon double bond at the first carbon atom (a-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present disclosure.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight can be determined by conventional methods, preferably by gel permeation-chromatography (GPC) using polystyrene as standard, styrene-divinylbenzene gel with porosity of 100 Angstrom, 1000 Angstrom and 10000 Angstrom as the column, and tetrahydrofurane as a solvent, at a temperature of 35°C.

The term "melting temperature" refers to a temperature at which a material undergoes transition from the solid to the liquid state. The melting temperature (Tₘ) is preferably determined by differential scanning calorimetry (DSC) according to ISO 11357 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using a rheometer in torsional mode (with cyclic torsional load) with an applied frequency of 1 Hz and a strain level (amplitude) of 1 %.

The term "softening point" refers to a temperature at which compound softens in a rubber-like state, or a temperature at which the crystalline portion within the compound melts. The softening point is preferably determined by Ring and Ball measurement conducted according to DIN EN 1238 standard.

The term "comonomer content of a copolymer" refers to the total amount of comonomers in the copolymer given in wt.-% or mol.-%. The comonomer content can be determined by IR spectroscopy or by quantitative nuclear-magnetic resonance (NMR) measurements.

The "amount or content of at least one component X" in a composition, for example "the amount of the at least one thermoplastic polymer" refers to the sum of the individual amounts of all thermoplastic polymers contained in the composition. For example, in case the composition comprises 20 wt.-% of at least one thermoplastic polymer, the sum of the amounts of all thermoplastic polymers contained in the composition equals 20 wt.-%.

The term "layer" refers to a sheet-like element having first and second major surfaces, i.e. top and bottom surfaces, defining a thickness there between. The term "thickness" refers to a dimension of a sheet-like element that is measured in a plane that is substantially perpendicular to the length and width dimensions of the element. The term "polymeric layer" refers to layer comprising a continuous phase composed of one or more polymers. Preferably the term "layer" refers to a sheet-like element having a length and width at least 5 times, preferably at least 25 times, more preferably at least 50 times greater than the thickness of the element.

Preferably, the first and second polymeric layers are directly or indirectly connected to each other over at least part of their opposing major surfaces. The first and second polymeric layers can be indirectly connected to each other, for example, via a connecting layer, such as a layer of adhesive or via a layer of fiber material, or a combination thereof. In case a porous connecting layer, such as an open weave fabric, the first polymeric layer may be partially directly connected and partially indirectly connected to the second polymeric layer. The expression "directly connected" is understood to mean in the context of the present disclosure that no further layer or substance is present between the two layers and that the opposing surfaces of the two layers are directly bonded to each other or adhere to each other. At the transition area between the two layers, the materials forming the layers can also be present mixed with each other.

According to one or more embodiments, the first and second polymeric layers are directly connected to each other over at least part of their opposing major surfaces. According to one or more further embodiments, the second polymeric layer is directly connected over its substantially entire first major surface to the second major surface of the first polymeric layer. The expression "substantially entire surface" is understood to mean that at least 90 %, preferably at least 95 %, more preferably at least 97.5 % of the area of the first major surface of the second polymeric layer is directly connected to the second major surface of the first polymeric layer.

According to one or more embodiments, the first and second polymeric layers have substantially same width and length and the second polymeric layer covers at least 75 %, preferably at least 85 %, more preferably at least 95 %, even more preferably at least 97.5 % of the area of the second major surface of the first polymeric layer.

The second polymeric layer is preferably not tacky to touch at a temperature of 23 °C. Whether a layer material is "tacky to the touch" at a specific temperature can be easily determined by pressing the surface of the layer at the specific temperature with a finger. In doubtful cases, the "tackiness" can be determined by spreading powdered chalk on the surface of the layer at the specific temperature and subsequently tipping the surface so that the powdered chalk falls off. If the residual powdered chalk remains visibly adhering to the surface, the layer is considered tacky at the specific temperature.

According to one or more embodiments, the second polymeric layer has a loop tack adhesion to a glass plate measured at a temperature of 23 °C of not more than 1.0 N/25 mm, preferably not more than 0.5 N/25 mm, more preferably not more than 0.1 N/25 mm, even more preferably 0 N/25 mm. The loop tack adhesion can be measured using a "FINAT test method no. 9 (FTM 9) as defined in FINAT Technical Handbook, 9th edition, published in 2014.

Suitable polymers for use in the first polymeric layer include, for example, thermoplastic polymers, thermoplastic elastomers (TPE), thermoplastic polyolefins (TPO), and elastomers.

The term "thermoplastic" refers in the present disclosure to any material which can be melted and re-solidified with little or no change in physical properties whereas the term "thermoplastic elastomer (TPE)" refers to a polymer or a polymer blend, which above its melting temperature exhibits a thermoplastic character that enables it to be shaped into a fabricated article and which exhibits elastomeric behavior over a specified "design temperature range".

Furthermore, the term "elastomer" refers to a polymer or a polymer blend, which is capable of recovering from large deformations, and which can be, or already is, modified to a state in which it is essentially insoluble (but can swell) in a boiling solvent, in particular xylene. Typical elastomers are capable of being elongated or deformed to at least 200% of their original dimension under an externally applied force, and will substantially resume the original dimensions, sustaining only small permanent set (typically no more than about 20%), after the external force is released. The terms "elastomer" and "rubber" are often used interchangeably.

Thermoplastic polyolefins (TPO) is a specific group of thermoplastic elastomers (TPE), which are based solely on olefinic components. These types of materials are also known as "thermoplastic olefins" or "olefinic thermoplastic elastomers" (TPE-O). Thermoplastic polyolefins (TPO) are heterophase polyolefin compositions containing a high crystallinity base polyolefin and a low-crystallinity or amorphous polyolefin modifier, wherein the heterophasic phase morphology typically consists of a matrix phase composed primarily of the base polyolefin and a dispersed phase composed primarily of the polyolefin modifier. Thermoplastic polyolefins having other types of phase morphologies, such as co-continuous phases of the base polyolefin and the polyolefin modifier, are also known.

Nowadays commercially available TPOs include reactor blends of the base polyolefin and the polyolefin modifier, which are also known as "reactor TPOs", "in-situ TPOs", "impact copolymers", or "heterophasic copolymers". Before the introduction of reactor blends, TPOs were typically provided as physical blends of the base polyolefin and polyolefin modifier. Reactor blend-type TPOs are commonly produced using a sequential polymerization process, in which the components of the matrix phase are produced in a first reactor and transferred to a second reactor, where the components of the dispersed phase are produced and incorporated as domains in the matrix phase. Physical blend-type TPOs are prepared by melt-mixing the base polyolefin with the polyolefin modifier each of which was separately formed prior to blending of the components.

Reactor blend- type TPOs comprising polypropylene as the base polymer and one or more ethylene copolymers as the polyolefin modifier are often referred to as "heterophasic polypropylene copolymers" or as "heterophasic propylene copolymers" whereas reactor-blend type TPOs comprising propylene random copolymer, such as propylene - ethylene random copolymer, as the base polymer and one or more ethylene copolymers as the polyolefin modifier are often referred to as "heterophasic polypropylene random copolymers" or as "heterophasic propylene random copolymers". On the other hand, certain reactor blend- type TPOs comprising polypropylene or propylene random copolymer as the base polyolefin are also characterized as "polypropylene impact copolymers (ICP)" or "reactor-TPOs" or "soft-TPOs" depending mainly on the amount and type, in particular the comonomer content of the low-crystallinity or amorphous polyolefin modifier. Generally, the polypropylene impact copolymers (ICP) tend to have a lower rubber content, i.e. lower xylene cold soluble content determined according to ISO 16152-2005 standard, as well as higher flexural modulus determined according to ISO 178:2010 standard compared to the reactor-TPOs and soft-TPOs.

According to one or more embodiments, the first polymeric layer comprises at least one polymer **P** selected from the group consisting of ethylene - vinyl acetate copolymer (EVA), ethylene - acrylic ester copolymers, ethylene - α-olefin copolymers, propylene - α-olefin copolymers, polypropylene (PP), polyethylene (PE), polyvinylchloride (PVC), polyethylene terephthalate (PET), polystyrene (PS), polyamides (PA), chlorosulfonated polyethylene (CSPE), ethylene propylene diene terpolymer rubber (EPDM), and polyisobutylene (PIB). According to one or more preferred embodiments, the first polymeric layer comprises at least one polymer **P** selected from the group consisting of ethylene - vinyl acetate copolymer (EVA), ethylene - α-olefin copolymers, propylene - α-olefin copolymers, polypropylene (PP), polyethylene (PE), polyvinylchloride (PVC), chlorosulfonated polyethylene (CSPE), and ethylene propylene diene terpolymer rubber (EPDM).

According to one or more embodiment, the at least one polymer **P** comprises at least 35 wt.-%, preferably at least 45 wt.-%, more preferably at least 55 wt.-% of the total weight of the first polymeric layer. According to one or more embodiments, the at least one polymer **P** comprises 40 - 95 wt.-%, preferably 45 - 95 wt.-%, more preferably 50 - 95 wt.-% of the total weight of the first polymeric layer.

According to one or more further embodiments, the at least one polymer **P** is selected from the group consisting of thermoplastic polyolefins (TPO), propylene copolymers, and polypropylene.

The term "propylene copolymer" refers in the present disclosure to a copolymer formed from propylene and one or more comonomers wherein the propylene units are present in a major amount and the comonomer units are present in a minor amount, i.e. in an amount of less than 50 wt.-%, based on the weight of the copolymer. The term "polypropylene" refers in the present disclosure to isotactic polypropylene (iPP), syndiotactic polypropylene (sPP), and homopolymer polypropylene (hPP).

Particularly suitable thermoplastic polyolefins (TPO) to be used as the at least one polymer **P** include reactor-blend-type of thermoplastic polyolefins, preferably comprising polypropylene and/or propylene random copolymer as the high crystallinity base polyolefin and one or more ethylene copolymer(s), such as ethylene propylene-rubber (EPR), as the low-crystallinity or amorphous polyolefin modifiers.

Suitable commercially available thermoplastic polyolefins (TPO) to be used as the at least one polymer **P** include, for example, the "reactor TPOs" produced with LyondellBasell's Catalloy process technology, which are commercially available under the trade names of Adflex®, Adsyl®, Clyrell®, Hifax®, Hiflex®, and Softell®, such as such Hifax® CA 10A, Hifax® CA 12A, and Hifax® CA 212 A and the "random heterophasic copolymers", which are commercially available under the trade name of Borsoft®, such as Borsoft® SD233 CF (from Borealis Polymers).

Suitable propylene copolymers to be used as the at least one polymer **P** include propylene - α-olefin copolymers, in particular propylene-ethylene copolymers and propylene-α-olefin copolymers of propylene and one or more C₄-C₂₀ α-olefin monomers, in particular one or more of 1-butene, 1-pentene, 1-hexene, 1- heptene, 1-octene, 1-decene, 1-dodecene, and 1-hexadodecene, preferably comprising at least 50 wt.-%, more preferably at least 60 wt.-% of propylene-derived units, based on the total weight of the copolymer. Suitable propylene - α-olefin copolymers include, for example, propylene-based elastomers (PBE) and propylene-based plastomers (PBP), which are commercially available, for example, under the trade name of Versify@ (from Dow Chemical Company) and under the trade name of Vistamaxx® (from Exxon Mobil).

According to one or more embodiments, the at least one polymer **P** comprises at least one thermoplastic polyolefin **P1,** preferably a heterophasic propylene copolymer and/or at least one propylene copolymer **P2,** preferably selected from the group consisting of propylene-based elastomers and propylene-based plastomers.

Generally, the expression "the at least one component X comprises at least one component XN", such as "the at least one polymer **P** comprises at least one thermoplastic polyolefin **P1**" is understood to mean in the context of the present disclosure that the composition in question comprises one or more thermoplastic polyolefins **P1** as representatives of the at least one polymer **P.**

Preferably, the at least one thermoplastic polyolefin **P1** is a heterophasic propylene copolymer comprising:
- A) a high-crystallinity propylene polymer having a melting point (Tₘ) of 100°C or more, preferably a propylene homopolymer and/or random copolymer of propylene having a relatively low comonomer content, such as less than 5 wt.-%, and
- B) a polyolefin having a glass transition temperature (T_{g}) of -20°C or less, preferably an ethylene copolymer having a relatively high comonomer content, such as at least 5 wt.-%, preferably at least 10 wt.-%, and having a glass transition temperature (T_{g}) of -30 °C or less, preferably -40 °C or less, preferably an ethylene - propylene-rubber (EPR),
   wherein the heterophasic propylene copolymer comprises a matrix phase composed primarily of A) and a dispersed phase composed primarily of B).

Preferably, the at least one thermoplastic polyolefin **P1** is a reactor blend of A) and B), wherein the reactor blend has been obtained by using a sequential polymerization process, wherein constituents of the matrix phase A) are produced in a first reactor and transferred to a second reactor where constituents of the dispersed phase B) are produced and incorporated as domains into the matrix phase.

According to one or more embodiments, the at least one thermoplastic polyolefin **P1** has:
- a flexural modulus at 23°C, determined according to ISO 178 standard, of not more than 1500 MPa, preferably not more than 1000 MPa, more preferably not more than 750 MPa, even more preferably not more than 650 MPa, still more preferably not more than 600 MPa, most preferably not more than 550 MPa and/or
- a xylene cold soluble content, determined according to ISO 16152-2005, of not more than 50 wt.-%, preferably not more than 45 wt.-%, more preferably not more than 40 wt.-%,even more preferably not more than 35 wt.-% and/or
- a melt flow rate (2.16 kg at 230°C), determined according to ISO 1133-1 standard, of not more than 50 g/10 min, preferably not more than 30 g/10 min, more preferably not more than 25 g/10 min, even more preferably not more than 15 and/or
- a melting temperature (Tₘ), determined by DSC according to ISO 11357 standard using a heating rate of 2°C/min, of at least 100°C, preferably at least 110°C, more preferably at least 120°C, even more preferably at least 130°C.

According to one or more embodiments, the at least one thermoplastic polyolefin **TP1** is a heterophasic propylene copolymer having a content of ethylene derived units of not more than 35 wt.-%, preferably not more than 30 wt.-%, more preferably not more than 25 wt.-%, even more preferably not more than 20 wt.-%, still more preferably not more than 15 wt.-%, most preferably not more than 10 wt.-%.

According to one or more embodiments, the at least one propylene copolymer **P2** is selected from the group consisting of propylene-based elastomers and propylene-based plastomers.

According to one or more embodiments, the at least one propylene copolymer **TP** is a propylene - ethylene copolymer having a content of propylene derived units of 75 - 95 wt.-%, preferably 80 - 90 wt.-% and/or a content of ethylene derived units of 5 - 25 wt.-%, preferably 9 - 18 wt.-%, more preferably 12 - 18 wt.-%.

According to one or more embodiments, the at least one propylene copolymer **P2** has:
- a flexural modulus at 23 °C determined according to ISO 178 standard of not more than 100 MPa, preferably not more than 50 MPa, more preferably not more than 35 MPa, even more preferably not more than 25 MPa, still more preferably not more than 15 MPa and/or
- a melting temperature (Tₘ) determined by DSC according to ISO 11357 standard using a heating rate of 2 °C/min of not more than 110 °C, preferably not more than 105 °C, more preferably not more than 100 °C and/or
- a heat of fusion (Hf) determined by DSC using a heating rate of 10 °/min of not more than 80 J/g, preferably not more than 70 J/g, more preferably not more than 65 J/g, even more preferably not more than 50 J/g and/or
- a xylene cold soluble content determined according to ISO 16152-2005 standard of at least 75 wt.-%, preferably at least 80 wt.-%, more preferably at least 85 wt.-%, even more preferably at least 90 wt.-%, still more preferably at least 95 wt.-% and/or
- a softening temperature (Tₛ) determined by Ring and Ball measurement according to DIN EN 1238 standard of not more than 90 °C, preferably not more than 80 °C, more preferably not more than 70 °C and/or
- a melt flow rate (2.16 kg at 230 °C) determined according to ISO 1133-1 standard of not more than 50 g/10 min, preferably not more than 40 g/10 min, more preferably not more than 35 g/10 min and/or
- an average molecular weight (Mₙ) in the range of 10000 - 250000 g/mol, preferably 25000 - 200000 g/mol.

According to one or more embodiment, the at least one polymer **P** comprises the at least one thermoplastic polyolefin **P1** and the at least one propylene copolymer **P2,** wherein the weight ratio of the amount of the at least one thermoplastic polyolefin **P1** to the amount of the at least one propylene copolymer **P2** in the first polymeric layer is preferably in the range of form 10:1 to 1:5, preferably from 5:1 to 1:3, more preferably from 3:1 to 1:2, even more preferably from 2:1 to 1:2.

According to one or more embodiments, the first polymeric layer further comprises at least one flame retardant.

Suitable flame retardants to be used in the first polymeric layer include, for example, magnesium hydroxide, aluminum trihydroxide, antimony trioxide, ammonium polyphosphate, and melamine-, melamine resin-, melamine derivative-, melamine-formaldehyde-, silane-, siloxane-, and polystyrene-coated ammonium polyphosphates. Further suitable flame retardants include 1,3,5-triazine compounds, such as melamine, melam, melem, melon, ammeline, ammelide, 2-ureidomelamine, acetoguanamine, benzoguanamine, diaminophenyltriazine, melamine salts and adducts, melamine cyanurate, melamine borate, melamine orthophosphate, melamine pyrophosphate, dimelamine pyrophosphate and melamine polyphosphate, oligomeric and polymeric 1,3,5-triazine compounds and polyphosphates of 1,3,5-triazine compounds, guanine, piperazine phosphate, piperazine polyphosphate, ethylene diamine phosphate, pentaerythritol, borophosphate, 1,3,5-trihydroxyethylisocyanaurate, 1,3,5-triglycidylisocyanaurate, triallylisocyanurate and derivatives of the aforementioned compounds.

Suitable flame retardants are commercially available, for example, under the trade name of Martinal® and Magnifin® (both from Albemarle) and under the trade names of Exolit® (from Clariant), Phos-Check® (from Phos-Check) and FR CROS® (from Budenheim).

According to one or more embodiments, the at least one flame retardant comprises 1 - 60 wt.-%, preferably 5 - 55 wt.-%, more preferably 10 - 50 wt.-%, even more preferably 10 - 40 wt.-% of the total weight of the first polymeric layer.

According to one or more embodiments, the at least one flame retardant has a median particle size d₅₀ of not more than 25 µm, preferably not more than 15 µm, more preferably not more than 10 µm, even more preferably not more than 5 µm. The term "median particle size d₅₀" refers to a particle size below which 50 % of all particles by volume are smaller than the d₅₀ value. The term "particle size" refers in the present disclosure to the area-equivalent spherical diameter of a particle. The particle size distribution can be determined by laser diffraction method according to ISO 13320:2009 standard. A Mastersizer 2000 device (trademark of Malvern Instruments Ltd, GB) can be used in measuring particle size distribution.

According to one or more embodiments, the first polymeric layer further comprises at least one filler.

Suitable fillers to be used in the first polymeric layer include, for example, inert mineral fillers. The term "inert mineral filler" designates in the present disclosure mineral fillers, which, unlike mineral binders do not undergo a hydration reaction in the presence of water.

Suitable inert mineral fillers include, for example, sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

The inert mineral fillers, if used, are preferably present in the first polymeric layer in form of solid particles, preferably having a d₉₀ particle size of not more than 250 µm, more preferably not more than 150 µm, even more preferably not more than 100 µm, still more preferably not more than 50 µm. The term "d₉₀ particle size" refers to a particle size below which 90 % of all particles by volume are smaller than the d₉₀ value.

The first polymeric layer may further comprise auxiliary components such as UV- and heat stabilizers, antioxidants, plasticizers, dyes, pigments such as titanium dioxide and carbon black, matting agents, antistatic agents, impact modifiers, biocides, and processing aids such as lubricants, slip agents, antiblock agents, and denest aids. It is, however, preferred that the total amount of these types of auxiliary components is not more than 35 wt.-%, preferably not more than 25 wt.-%, more preferably not more than 15 wt.-%, even more preferably not more than 10 wt.-%, based on the total weight of the first polymeric layer.

According to one or more embodiments, the first polymeric layer has a thickness determined according to the DIN EN 1849-2 standard in the range of 0.05 - 2.0 mm, preferably 0.1 - 1.5 mm, more preferably 0.15 - 1.0 mm, even more preferably 0.2 - 1.0 mm, still more preferably 0.25 - 0.75 mm.

It can also be advantageous that the sealing device further comprises a top-coating covering at least a portion of the first major surface of the first polymeric layer. The top-coating may comprise UV-absorbers and/or thermal stabilizers to protect the sealing device from damaging influence of sunlight. The top-coating may also comprise color pigments in order to provide the sealing device with a desired color.

According to one or more embodiments, the sealing device further comprises:
iii. A third polymeric layer having first and second major surfaces, wherein the second polymeric layer is located between the first and third polymeric layers.

The preferences given above for the composition of the first polymeric layer apply also to the composition of the third polymeric layer.

Preferably, the second and third polymeric layers are directly or indirectly connected to each other over at least part of their opposing major surfaces. The second and third polymeric layers can be indirectly connected to each other, for example, via a connecting layer, such as a layer of adhesive or via a layer of fiber material, or a combination thereof. In case a porous connecting layer, such as an open weave fabric, the second polymeric layer may be partially directly connected and partially indirectly connected to the third polymeric layer.

According to one or more embodiments, the second and third polymeric layers are directly connected to each other over at least part of their opposing major surfaces. According to one or more further embodiments, the second polymeric layer is directly connected over its substantially entire second major surface to the first major surface of the third polymeric layer. The expression "substantially entire surface" is understood to mean that at least 90 %, preferably at least 95 %, more preferably at least 97.5 % of the area of the second major surface of the second polymeric layer is directly connected to the first major surface of the third polymeric layer.

According to one or more embodiments, the second and third polymeric layers have substantially same width and length and the second polymeric layer covers at least 75 %, preferably at least 85 %, more preferably at least 95 %, even more preferably at least 97.5 % of the area of the first major surface of the third polymeric layer.

According to one or more embodiments, the third polymeric layer has a thickness determined according to the DIN EN 1849-2 standard in the range of 0.05 - 2.0 mm, preferably 0.1 - 1.5 mm, more preferably 0.15 - 1.0 mm, even more preferably 0.2 - 1.0 mm, still more preferably 0.25 - 0.75 mm.

According to one or more embodiment, the sealing device further comprises a layer of fiber material.

The term "fiber material" designates in the present document materials composed of fibers comprising or consisting of, for example, organic, inorganic or synthetic organic materials. Examples of organic fibers include, for example, cellulose fibers, cotton fibers, and protein fibers. Particularly suitable synthetic organic materials include, for example, polyester, homopolymers and copolymers of ethylene and/or propylene, viscose, nylon, and polyamides. Fiber materials composed of inorganic fibers are also suitable, in particular, those composed of metal fibers or mineral fibers, such as glass fibers, aramid fibers, wollastonite fibers, and carbon fibers. Inorganic fibers, which have been surface treated, for example, with silanes, may also be suitable. The fiber material can comprise short fibers, long fibers, spun fibers (yarns), or filaments. The fibers can be aligned or drawn fibers. It may also be advantageous that the fiber material is composed of different types of fibers, both in terms of geometry and composition.

Preferably, the layer of fiber material is selected from the group consisting of non-woven fabrics, woven fabrics, and laid scrims, more preferably from the group consisting of non-woven fabrics and laid scrims.

The term "non-woven fabric" refers in the present disclosure to materials composed of fibers, which are bonded together by using chemical, mechanical, or thermal bonding means, and which are neither woven nor knitted. Non-woven fabrics can be produced, for example, by using a carding or needle punching process, in which the fibers are mechanically entangled to obtain the nonwoven fabric. In chemical bonding, chemical binders such as adhesive materials are used to hold the fibers together in a non-woven fabric. Typical materials for the non-woven fabrics include synthetic organic and inorganic fibers.

The term "laid scrim" refers in the present disclosure web-like non-woven products composed of at least two sets of parallel yarns (also designated as weft and warp yarns), which lay on top of each other and are chemically bonded to each other. The yarns of a non-woven scrim are typically arranged with an angle of 60 - 120°, such as 90 ± 5°, towards each other thereby forming interstices, wherein the interstices occupy more than 60% of the entire surface of the laid scrim. Typical materials for laid scrims include metal fibers, inorganic fibers, in particular glass fibers, and synthetic organic fibers, in particular polyester, polypropylene, polyethylene, and polyethylene terephthalate (PET).

According to one or more embodiments, the layer of fiber material is a non-woven fabric composed of synthetic organic fibers or inorganic fibers, wherein the synthetic organic fibers are preferably selected from the group consisting of polyester fibers, polypropylene fibers, polyethylene fibers, nylon fibers, and polyamide fibers and wherein the inorganic fibers are selected from the group consisting of glass fibers, aramid fibers, wollastonite fibers, and carbon fibers and wherein the non-woven fabric preferably has a mass per unit weight of not more than 350 g/m², more preferably not more than 300 g/m², even more preferably not more than 250 g/m², such as in the range of 10 - 300 g/m², preferably 15 - 250 g/m². The mass per unit area of a non-woven fabric can be determined by measuring the mass of test piece of the non-woven fabric having a given area and dividing the measured mass by the area of the test piece. Preferably, the mass per unit area of a non-woven fabric is determined as defined in ISO 9073-18:2007 standard.

According to one or more further embodiments, the layer of fiber material is a laid scrim, preferably composed of synthetic organic fibers or glass fibers, wherein the synthetic organic fibers are preferably selected from the group consisting of polyester fibers, polypropylene fibers, polyethylene fibers, and polyethylene terephthalate (PET) fibers.

The layer of fiber material can be at least partially embedded into at least one of the polymeric layers of the sealing device or adhesively adhered to at least one of the major surfaces of the polymeric layers. The expression "at least partially embedded" is understood to mean that at least a portion of the fibers contained in the layer of fiber material are embedded into one or more of the polymeric layers of the sealing device, i.e. covered by the matrix of one or more of the polymeric layers.

According to one or more embodiments, the sealing device comprises a first layer of fiber material and/or a second layer of fiber material, wherein the first layer of fiber material is preferably fully embedded into one of the polymeric layer of the sealing device and wherein the second layer of fiber material is partially embedded into at least one of the polymeric layers of the sealing device or adhesively adhered to at least one of the major surfaces of the polymeric layers. The expression "fully embedded" is understood to mean that the layer of fiber material is fully covered by the matrix of one of the polymeric layers of the sealing device.

According to one or more embodiment, the first layer of fiber material is a laid scrim, preferably composed of synthetic organic fibers or glass fibers, wherein the synthetic organic fibers are preferably selected from the group consisting of polyester fibers, polypropylene fibers, polyethylene fibers, and polyethylene terephthalate (PET) fibers and the second layer of fiber material is a non-woven fabric composed of synthetic organic fibers or inorganic fibers, wherein the synthetic organic fibers are preferably selected from the group consisting of polyester fibers, polypropylene fibers, polyethylene fibers, nylon fibers, and polyamide fibers and wherein the inorganic fibers are selected from the group consisting of glass fibers, aramid fibers, wollastonite fibers, and carbon fibers and wherein the non-woven fabric preferably has a mass per unit weight of not more than 350 g/m², more preferably not more than 300 g/m², even more preferably not more than 250 g/m², such as in the range of 10 - 300 g/m², preferably 15 - 250 g/m².

According to one or more embodiments, the second layer of fiber material has been thermally laminated to one of the major surfaces of the third polymeric layer, preferably to the second major surface of the third polymeric layer, in a manner that gives direct bonding between the second layer of fiber material and the third polymeric layer. The term "thermal lamination" refers in the present disclosure to a process, in which the layers are bonded to each by the application of thermal energy. In particular, the term "thermal lamination" refers to a process comprising partially melting at least one of the layers upon application of thermal energy followed by a cooling step, which results in formation of a physical bond between the layers without using an adhesive.

The second polymeric layer of the sealing device of the present invention comprises at least 55 wt.-%, preferably at least 65 wt.-%, more preferably at least 70 wt.-%, even more preferably at least 75 wt.-%, still more preferably at least 80 wt.-% of at least one butene-1 copolymer having a content of butene-1 derived units of at least 65 mol.-%, preferably at least 70 mol.-%.

Preferably, the at least one butene-1 copolymer is a copolymer of butene-1 with one or more α-olefins, preferably selected from the group consisting of ethylene, propylene, pentene-1, hexane-1, 4-methylpentene and octene-1. According to one or more embodiments, the at least one butene-1 copolymer has a content of butene-1 derived units of at least 65 mol.-%, preferably at least 70 mol.-% and a content of ethylene derived units of not more than 18 mol.-%, preferably 5 - 18 mol.-%, more preferably 13 -18 mol.-%.

Suitable butene-1 copolymers can be obtained, for example, by polymerizing the monomers in the presence of a metallocene catalyst system obtainable by contacting a stereorigid metallocene compound, an alumoxane or a compound capable of forming an alkyl metallocene cation, and, optionally an organo aluminum compound. Examples of the said metallocene catalyst system and of polymerization processes employing such catalyst system can be found in WO 2004/099269 A2 and WO 2009/000637 A1.

Suitable butene-1 copolymers to be used in the second polymeric layer are commercially available, for example, under the trade name of Koattro®, such as Koattro KT MR 05 (from Lyondell Basell).

According to one or more embodiments, the at least one butene-1 (co) polymer has:
- a melt flow rate (190 °C/2.16 kg), determined according to ISO 1133-1 standard, of not more than 15 g/10 min, preferably not more than 10 g/10 min, more preferably not more than 7.5 g/10 min, in particular of 0.5 - 5.0 g/10 min, preferably 0.7 - 3.0 g/10 min and/or
- a flexural modulus at 23 °C, determined according to ISO 178 standard, of not more than 150 MPa, preferably not more than 125 MPa, more preferably not more than 75 MPa, even more preferably not more than 50 MPa, still more preferably not more than 35 MPa, in particular not more than 25 MPa and/or
- a polydispersity index (M_{w}/Mₙ), determined by GPC, of not more than 5, preferably in the range of 1.5 - 5, more preferably 1.5 - 4.5, even more preferably 2 - 4.5, still more preferably 2 - 4 and/or
- a xylene cold soluble content (XCS) determined according to ISO 16152-2005 of at least 50 wt.-%, preferably at least 60 wt.-%, more preferably at least 80 wt.-%, even more preferably at least 85 wt.-% and/or
- an intrinsic viscosity determined in tetralin at temperature of 135 °C according to ISO 1628-3:2010 standard of 1 - 5 dL/g, preferably of 1 - 4.5 dL/g, more preferably 1.5 - 4 dL/g, even more preferably 1.5 - 3.5 dL/g, still more preferably 1.5 - 2.5 dL/g and/or
- a glass transition temperature (T_{g}), determined by dynamical mechanical analysis (DMA) as the peak of the measured loss modulus (G") using a cyclic torsional load with a frequency of 1 Hz and a strain level of 1 %, of below -10 °C, preferably below -15 °C, more preferably below -20 °C, even more preferably below -25 °C.

According to one or more embodiments, second polymeric layer further comprises at least one heterophasic propylene copolymer and/or at least one propylene copolymer.

According to one or more embodiments, the at least one heterophasic propylene copolymer has:
- a flexural modulus at 23 °C determined according to ISO 178 standard of not more than 1000 MPa, preferably not more than 750 MPa, more preferably not more than 700 MPa, even more preferably not more than 650 MPa, still more preferably not more than 600 MPa, most preferably not more than 500 MPa and/or
- a xylene cold soluble content determined according to ISO 16152-2005 of not more than 50 wt.-%, preferably not more than 45 wt.-%, more preferably not more than 40 wt.-%,even more preferably not more than 35 wt.-% and/or
- a melt flow rate (2.16 kg at 230 °C) determined according to ISO 1133-1 standard of not more than 50 g/10 min, preferably not more than 30 g/10 min, more preferably not more than 25 g/10 min, even more preferably not more than 15 and/or
- a melting temperature (Tₘ) determined by DSC according to ISO 11357 standard using a heating rate of 2 °C/min of at least 100 °C, preferably at least 110 °C, more preferably at least 120 °C, even more preferably at least 130 °C.

Suitable heterophasic propylene copolymers to be used in the second polymeric layer that are commercially available include, for example, the "reactor TPOs" produced with LyondellBasell's Catalloy process technology, which are available under the trade names of Adflex®, Adsyl®, Clyrell®, Hifax®, Hiflex®, and Softell® and the "random heterophasic copolymers", which are commercially available under the trade name of Borsoft®, such as Borsoft® SD233 CF (from Borealis Polymers).

According to one or more embodiments, the at least one heterophasic propylene copolymer comprises:
- A) a polypropylene component having a melting point (Tₘ) determined by DSC according to ISO 11357 standard using a heating rate of 2 °C/min of 100 °C or more, preferably a propylene homopolymer and/or a random copolymer of propylene having a comonomer content of less than 5 wt.-%, and
- B) a polyolefin component having a glass transition temperature (T_{g}) determined by dynamical mechanical analysis (DMA) as the peak of the measured loss modulus (G") using a cyclic torsional load with a frequency of 1 Hz and a strain level of 1 % of -20 °C or less, preferably - 30 °C or less, preferably one or more copolymers of ethylene having a comonomer content of at least 5 wt.-%, preferably at least 10 wt.-%, preferably ethylene - propylene-rubber (EPR),
wherein the at least one heterophasic propylene copolymer comprises a matrix phase composed primarily of A) and a dispersed phase composed primarily of B).

According to one or more embodiments, the at least one heterophasic propylene copolymer is a reactor blend of A) and B), wherein the reactor blend has been preferably obtained by using a sequential polymerization process, wherein constituents of the matrix phase are produced in a first reactor and transferred to a second reactor where constituents of the dispersed phase are produced and incorporated as domains into the matrix phase.

According to one or more embodiments, the at least one heterophasic propylene copolymer is a reactor blend of A) and B), wherein A) comprises or is composed of at least one random copolymer of propylene and wherein the at least one heterophasic polypropylene copolymer preferably has a content of ethylene derived units of not more than 35 wt.-%, preferably not more than 30 wt.-%, more preferably not more than 25 wt.-%, even more preferably not more than 20 wt.-%, still more preferably not more than 15 wt.-%, most preferably not more than 10 wt.-%.

Suitable propylene copolymers include, in particular, copolymers of propylene and at least one comonomer selected from the group consisting of ethylene and C₄-C₁₀ α-olefins, wherein the copolymer has a content of propylene-derived units of at least 65 wt.-%, preferably at least 70 wt.-% and a content of units derived from at least one of ethylene or a C₄-C₁₀ α-olefin of 1 - 35 wt.-%, preferably 5 - 25 wt.-%.

According to one or more embodiments, the at least one propylene copolymer is a propylene - ethylene copolymer having a content of propylene derived units of 75 - 95 wt.-%, preferably 80 - 90 wt.-% and/or a content of ethylene derived units of 5 - 25 wt.-%, preferably 9 - 18 wt.-%, more preferably 12 - 18 wt.-%.

According to one or more embodiments, the at least one propylene copolymer has:
- a flexural modulus at 23 °C determined according to ISO 178 standard of not more than 100 MPa, preferably not more than 50 MPa, more preferably not more than 35 MPa, even more preferably not more than 25 MPa, still more preferably not more than 15 MPa and/or
- a melting temperature (Tₘ) determined by DSC according to ISO 11357 standard using a heating rate of 2 °C/min of not more than 110 °C, preferably not more than 105 °C, more preferably not more than 100 °C and/or
- a heat of fusion (Hf) determined by DSC using a heating rate of 10 °/min of not more than 80 J/g, preferably not more than 70 J/g, more preferably not more than 65 J/g, even more preferably not more than 50 J/g and/or
- a xylene cold soluble content determined according to ISO 16152-2005 standard of at least 75 wt.-%, preferably at least 80 wt.-%, more preferably at least 85 wt.-%, even more preferably at least 90 wt.-%, still more preferably at least 95 wt.-% and/or
- a softening temperature (Tₛ) determined by Ring and Ball measurement according to DIN EN 1238 standard of not more than 90 °C, preferably not more than 80 °C, more preferably not more than 70 °C and/or
- a melt flow rate (2.16 kg at 230 °C) determined according to ISO 1133-1 standard of not more than 50 g/10 min, preferably not more than 40 g/10 min, more preferably not more than 35 g/10 min and/or
- an average molecular weight (Mₙ) in the range of 10000 - 250000 g/mol, preferably 25000 - 200000 g/mol.

Suitable propylene copolymers for use in the second polymeric layer include propylene-based elastomers and plastomers, which are commercially available, for example, under the trade name of Versify® (from Dow Chemical Company) and under the trade name of Vistamaxx® (from Exxon Mobil).

According to one or more embodiments, the weight ratio of the amount of the at least one heterophasic polypropylene copolymer to the amount of the at least one propylene copolymer in the second polymeric layer is in the range of form 10:1 to 1:5, preferably from 5:1 to 1:3, more preferably from 3:1 to 1:2, even more preferably from 2:1 to 1:2.

According to one or more embodiments, the sum of the amounts of the at least one butene-1 copolymer, the at least one heterophasic propylene copolymer, and/or the at least one propylene copolymer comprises at least 80 wt.-%, preferably at least 85 wt.-%, more preferably at least 90 wt.-%, even more preferably at least 95 wt.-% of the total weight of the second polymeric layer.

According to one or more embodiments, the second polymeric layer comprises:
a) At least at least 55 wt.-%, preferably at least 65 wt.-%, more preferably at least 70 wt.-%, even more preferably at least 75 wt.-%, still more preferably at least 80 wt.-% of at least one butene-1 copolymer and
b) At least 2.5 wt.-%, preferably at least 5 wt.-% and not more than 45 wt.-%, preferably not more than 35 wt.-%, more preferably not more than 30 wt.-%, even more preferably not more than 25 wt.-%, still more preferably not more than 20 wt.-% of the at least one heterophasic polypropylene copolymer, all proportions being based on the total weight of the second polymeric layer.

According to one or more further embodiments, the second polymeric layer comprises:
a) At least at least 55 wt.-%, preferably at least 65 wt.-%, more preferably at least 70 wt.-%, even more preferably at least 75 wt.-%, still more preferably at least 80 wt.-% of at least one butene-1 copolymer,
b) At least 2.5 wt.-%, preferably at least 5 wt.-% and not more than 25 wt.-%, preferably not more than 20 wt.-%, more preferably not more than 15 wt.-%, even more preferably not more than 10 wt.-%, of the at least one heterophasic polypropylene copolymer, and
c) At least 2.5 wt.-%, preferably at least 5 wt.-% and not more than 25 wt.-%, preferably not more than 20 wt.-%, more preferably not more than 15 wt.-%, even more preferably not more than 10 wt.-%, of the at least one propylene copolymer, all proportions being based on the total weight of the second polymeric layer.

According to one or more embodiments, the second polymeric layer is substantially free of tackifying resins. The term "tackifying resin" designates in the present disclosure resins that in general enhance the adhesion and/or tackiness of a composition. Typical tackifying resins include synthetic resins, natural resins, and chemically modified natural resins having a relatively low average molecular weight (Mₙ), such as not more than 3500 g/mol, in particular not more than 2500 g/mol. The expression "substantially free of tackifying resins" is understood to mean that the amount of tackifying resins is preferably less than 1.0 wt.-%, more preferably less than 0.5 wt.-%, even more preferably less than 0.1 wt.-%, still more preferably less than 0.05 wt.-%, most preferably 0.0 wt.-%, based on the total weight of the second polymeric layer.

According to one or more embodiments, the second polymeric layer has a thickness determined according to the DIN EN 1849-2 standard in the range of 0.05 - 2.0 mm, preferably 0.1 - 1.5 mm, more preferably 0.15 - 1.0 mm, even more preferably 0.2 - 1.0 mm, still more preferably 0.25 - 0.75 mm.

According to one or more embodiments, the sealing device has a total thickness determined according to the DIN EN 1849-2 standard in the range of 0.35 - 5.0 mm, preferably 0.5 - 3.5 mm, more preferably 0.75 - 3.0 mm, even more preferably 0.75 - 2.5 mm, still more preferably 0.8 - 2.5 mm.

The preferences given above for the first, second, and third polymeric layers, and to the at least one layer of fiber material apply equally to all subjects of the present invention unless stated otherwise.

Another subject of the present invention is a method for producing a sealing device according to the present invention, the method comprising steps of:
i) Extruding or co-extruding melt-processed compositions of the polymeric layers and
ii) Bonding the extruded polymeric layers to each other.

Step i) of the method can be conducted using a suitable extrusion apparatus comprising at least one extruder, for example, a ram extruder, single screw extruder, a twin-screw extruder or a planetary roller extruder, and at least one extruder die. Such extrusion apparatuses are well known to a person skilled in the art. The melt-processed compositions of the polymeric layers are preferably obtained by melt-processing starting compositions comprising the constituents of the respective polymeric layer. The melt-processing is preferably conducted using an extruder, such as a single or twin-screw extruder or a planetary roller extruder.

The extruded polymeric layers can be bonded to each other, for example, by thermal lamination or by using an adhesive. The term "thermal lamination" refers here to a process comprising partially melting at least one of the layers upon application of thermal energy followed by a cooling step, which results in formation of a bond between the layers without using a bonding agent, such as an adhesive.

According to one or more embodiments, step i) of the method for producing a sealing device comprises co-extruding a melt-processed composition of the first polymeric layer and a melt-processed composition of the second polymeric layer through a common extruder die, preferably a flat die, using a co-extrusion apparatus. In these embodiments it may be preferable that the co-extrusion apparatus comprises a first extruder for melt-processing of a first starting composition comprising the constituents of the first polymeric layer and a second extruder for melt-processing of a second starting composition comprising the constituents of the second polymeric layer. The common extruder die is preferably equipped with a single- or a multi-manifold. The constituents of the polymeric layers may be fed to the extruder as individual streams, as a pre-mix, a dry blend, or as a master batch. The co-extruded polymeric layers can be bonded to each other, for example, by employing spaced apart calender cooling rolls through which the extruded shaped melt composite is drawn subsequently to step i).

Another subject of the present invention is a method for covering a substrate, the method comprising steps of:
I) Applying a first and a second sealing device according to the present invention onto the surface of the substrate to be covered,
II) Overlapping an edge region of the second sealing device over an overlapped section of an upper side of the first sealing device,
III) Bonding the opposing surfaces of the edge region and the overlapped section to each other by using heat-welding or adhesive bonding means. According to one or more embodiments, the substrate that is covered with the sealing devices is a roof substrate, preferably an insulation board, a cover board, or an existing roofing membrane.

According to one or more further embodiments, the method for covering a substrate comprises bonding the opposing surfaces of the edge region and the overlapped section to each other by using heat-welding means, wherein step III) comprises:
III') Heating the edge region of the second sealing device and the overlapped section of the first sealing device above the melting temperature of the composition of the first and second polymeric layers and
III") Bonding the opposing surfaces of the edge region and the overlapped section to each other under sufficient pressure to provide acceptable seam strength without use of an adhesive.

Steps III') and III") of the method for covering a substrate can be conducted manually, for example by using a hot air tool, or by using an automatic welding device, such as an automatic hot-air welding device, for example Sarnamatic® 661 welding device. The temperature to which the edge region of the second sealing device and the overlapped section of the first sealing device are heated depends on the embodiment of the first and second sealing devices and also whether the steps III') and III") are conducted manually or by using an automatic welding device. Preferably, the edge region of the second sealing device and the overlapped section of the first sealing device are heated to a temperature of at or above 150 °C, more preferably at or above 200 °C, even more preferably of above 250 °C.

Still another subject of the present invention is a waterproofed structure obtained by using the method for covering a substrate of the present invention.

### Examples

The followings materials were used in the examples:

**Table 1**

| | | |
|---|---|---|
| Borsoft SD233CF | Random heterophasic copolymer, flexural modulus (ISO 178) 400 MPa | Borealis AG |
| Vistamaxx 6202 | Propylene-based elastomer, ethylene content 15-16 wt.-% | ExxonMobil |
| Koattro KT MR 05 | Butene-1 copolymer, flexural modulus (ISO 178) < 10 MPa | LyondellBasell |

### Preparation of Single-layer membranes

Polymer compositions of the single-layer membranes comprising the constituents as shown in Table 2 were melt-processed in a two roll mill and then pressed into sheets having a thickness of ca. 1 mm using a laboratory curing press at a temperature of 200 °C and using a pressing time of 1 minute. After the preparation, the single-layer membranes were equilibrated (stored) for 1 week at temperature of 21 °C to allow the butene-1 copolymer contained in the prepared membrane to reach its equilibrium crystalline phase I.

### Tensile strength and elongation at break

Tensile strength and elongation at break were measured according to DIN EN 12311-2:2013 at a temperature of 21 °C using a Zwick tensile tester and a cross head speed of 100 mm/min.

The values for tensile strength and elongation at break presented in Table 2 have been obtained using sample strips, which were cut from the prepared single-layer membranes in a lengthwise direction.

### Glass transition temperature

The glass transition temperature (T_{g}) of the polymer blends used in providing the single layer membranes was determined by dynamical mechanical analysis (DMA) as the peak of the loss modulus (G") curve, which was measured using an Anton Paar rheometer in torsional mode (with cyclic torsional load) with an applied frequency of 1 Hz and a strain level (amplitude) of 1 %.

### Self-healing property

The single layer membranes prepared according to the procedure as describe above were also tested for their self-healing properties. Each tested single-layer membrane was first damaged by cutting through the membrane, wherein the resulting cut had a length of ca. 5 cm and it penetrated through the whole thickness of the membrane. The damaged membranes were then stored at a temperature of 21 °C for 1 or 7 days after which the self-healing of the cut was evaluated by visual means.

The degree of cut-healing after storing of the damaged membranes for 1 and 7 days was evaluated by tearing the cut slightly apart and by optically judging the length of the remaining open part of the cut. For example, a cut healing of 10 % means that from the original cut having a length of 5 cm, 4.5 cm were still found to be open after the respective storage period.

**Table 2**

| **Composition [wt.-%]** | **Ref-1** | **Ref-2** | **Ref-3** | **Ex-1** | **Ex-2** | **Ex-3** | **Ex-4** | **Ex-5** |
|---|---|---|---|---|---|---|---|---|
| Borsoft SD233CF | 50 | 37.5 | 25 | 20 | 15 | 10 | 5 | 0 |
| Vistamaxx 6202 | 50 | 37.5 | 25 | 20 | 15 | 10 | 5 | 0 |
| Koattro KT MR 05 | 0 | 25 | 50 | 60 | 70 | 80 | 90 | 100 |
| Total | 100 | 100 | 100 | 100 | 100 | 100 | 100 | 100 |

| **Properties** | | | | | | | | |
|---|---|---|---|---|---|---|---|---|
| Tensile strength [N/mm2] | 13.9 | 15.3 | 16 | 15.8 | 14.7 | 15.1 | 14.9 | 14.7 |
| Elongation at break [%] | 978 | 992 | 910 | 908 | 846 | 839 | 819 | 795 |
| Glass transition temperature [°C] | -34 | -36 | -39 | -40 | -40 | -42 | -42 | -43 |
| Cut healing, 1 day [%] | 0 | 0 | 10 | 10 | 10 | 30 | 30 | 50 |
| Cut healing, 7 days [%] | 0 | 0 | 0 | 10 | 50 | 90 | 90 | 90 |

## Claims

1. A sealing device (1) comprising:
i. A first polymeric layer (2) having first and second major surfaces and
ii. A second polymeric layer (3) having first and second major surfaces and comprising at least 55 wt.-%, preferably at least 65 wt.-%, based on the total weight of the second polymeric layer, of at least one butene-1 copolymer having a content of butene-1 derived units of at least 65 mol.-%, preferably at least 70 mol.-%.

2. The sealing device (1) according to claim 1, wherein the second polymeric layer (3) is not tacky to touch at a temperature of 23 °C.

3. The sealing device (1) according to claim 1 or 2, wherein the first polymeric layer (2) comprises at least one polymer P selected from the group consisting of ethylene - vinyl acetate copolymer (EVA), ethylene - α-olefin copolymers, propylene - α-olefin copolymers, polypropylene (PP), polyethylene (PE), polyvinylchloride (PVC), chlorosulfonated polyethylene (CSPE), and ethylene propylene diene terpolymer rubber (EPDM).

4. The sealing device (1) according to any one of previous claims further comprising:
iii. A third polymeric layer (4) having first and second major surfaces, wherein the second polymeric layer (3) is located between the first and third polymeric layers (2, 4).

5. The sealing device (1) according to any one of previous claim further comprising at least one layer of fiber material (5), preferably selected from the group consisting of non-woven fabrics, woven fabrics, and laid scrims.

6. The sealing device (1) according to any one of previous claims, wherein the at least one butene-1 copolymer has a content of ethylene derived units of not more than 18 mol.-%, preferably 5 - 18 mol.-%, more preferably 13 -18 mol.-%.

7. The sealing device (1) according to any one of previous claims, wherein the at least one butene-1 copolymer has a melt flow rate (190 °C/2.16 kg) determined according to ISO 1133-1 standard of not more than 15 g/10 min, preferably not more than 10 g/10 min and/or a flexural modulus at 23 °C determined according to ISO 178 standard of not more than 150 MPa, preferably not more than 125 MPa and/or a polydispersity index (M_{w}/Mₙ) determined by GPC of 1.5 - 5, preferably 1.5 - 4.5.

8. A sealing device (1) according to any one of previous claims, wherein the second polymeric layer (3) further comprises at least one heterophasic propylene copolymer and/or at least one propylene copolymer.

9. The sealing device (1) according to claim 8, wherein the at least one heterophasic propylene copolymer has a flexural modulus at 23 °C determined according to ISO 178 standard of not more than 1000 MPa, preferably not more than 750 MPa and/or a xylene cold soluble content (XCS) determined according to ISO 16152-2005 of not more than 50 wt.-%, preferably not more than 45 wt.-%.

10. The sealing device (1) according to claim 8 or 9, wherein the at least one propylene copolymer is a propylene - ethylene copolymer having a content of propylene derived units of 75 - 95 wt.-%, preferably 80 - 90 wt.-% and/or a content of ethylene derived units of 5 - 25 wt.-%, preferably 9 - 18 wt.-%.

11. The sealing device (1) according to any one of claims 8-10, wherein the at least one propylene copolymer has a flexural modulus at 23 °C determined according to ISO 178 standard of not more than 100 MPa, preferably not more than 50 MPa and/or a heat of fusion as determined by DSC using a heating rate of 10 °/min of not more than 80 J/g, preferably not more than 70 J/g and/or a xylene cold soluble content (XCS) determined according to ISO 16152-2005 standard of at least 75 wt.-%, preferably at least 85 wt.-%.

12. The sealing device (1) according to any one of claims 8-11, wherein the weight ratio of the amount of the at least one heterophasic propylene copolymer to the amount of the at least one propylene copolymer is in the range of from 10:1 to 1:5, preferably from 5:1 to 1:3.

13. The sealing device according to any one of previous claims, wherein the second polymeric layer has a thickness determined according to the DIN EN 1849-2 standard in the range of 0.1 - 1.5 mm, preferably 0.15 - 1.0 mm.

14. A method for producing a sealing device according to any one of previous claims, the method comprising steps of:
i) Extruding or co-extruding melt-processed compositions of the polymeric layers and
ii) Bonding the extruded polymeric layers to each other.

15. A method for covering a substrate comprising steps of:
I) Applying a first and a second sealing device according to any one of claims 1 - 13 onto the surface of the substrate to be covered,
II) Overlapping an edge region of the second sealing device over an overlapped section of an upper side of the first sealing device,
III) Bonding the opposing surfaces of the edge region and the overlapped section to each other by using heat-welding or adhesive bonding means.
